# EUROPEAN PATENT SPECIFICATION

(11) **EP 2 766 224 B1**
(45) Date of publication and mention of the grant of the patent: **26.12.2018**
(21) Application number: 12784134.4
(22) Date of filing: 12.10.2012
(51) Int. Cl.: B60R 1/12, B60R 11/04

(54) **INTEGRATED REAR CAMERA DISPLAY**
INTEGRIERTE RÜCKWÄRTSKAMERAANZEIGE
DISPOSITIF D'AFFICHAGE À CAMÉRA ARRIÈRE INTÉGRÉE

(30) Priority: 14.10.2011 US 201161547340 P
(43) Date of publication of application: 20.08.2014
(73) Proprietor: Continental Automotive Systems, Inc., Auburn Hills, MI 48326 (US)
(72) Inventor: SCHUMACHER, Christian Hans-Peter, Lake Orion, Michigan 48326 (US)
(74) Representative: Bobbert, Christiana
(86) International application number: PCT/US2012/059973
(87) International publication number: WO 2013/056064

(56) References cited:
- WO-A1-02/18174
- WO-A1-03/065084
- WO-A1-2006/063827
- WO-A1-2010/099416
- WO-A1-2011/042850
- JP-A- 2009 100 180
- US-A1- 2006 038 668
- US-A1- 2007 153 085
- US-B1- 6 243 003
- US-B1- 6 281 804

## Description

### TECHNICAL FIELD

The present disclosure relates to automotive vehicles, and more particularly to driver assistance devices for automotive vehicles.

### BACKGROUND

Rear view mirrors are used to assist a driver in backing up a vehicle and to view vehicles located behind them. Rear view mirrors are typically secured to the top-center of the windshield area for convenience of the driver. However, the mirror may be partially or fully obstructed by window pillars, passengers, luggage, headrests, video monitors or other objects located in the passenger compartment of the vehicle. Additionally, objects such as bike or tire racks may block the rear window of the vehicle also partially or fully obstructing the rear view mirror.

Additional devices, such as forward looking cameras can be use in collision avoidance systems and sensors may be used for systems such as adaptive cruise control or controlling the windshield wipers. Although these cameras and sensors are usually used by different vehicle systems, they may be mounted to the vehicle in the same area as the rear view mirror. That is, since the rear view mirror is partially obstructing view through the windshield at the rear view mirror mounting location it is desirable to take advantage of this position to mount exterior viewing cameras and sensors to minimize further obstructions through the vehicle windshield.

Document US 2006/038668 describes an accessory module is mountable to an interior surface of a vehicle windshield and includes a mounting element securable to an interior surface of a windshield of a vehicle, and an accessory support having a base portion attachable to the mounting element. The accessory support includes an accessory holding element configured to hold an accessory, at least one circuitry holding element configured to hold a printed circuit board at the accessory support, and an electrical connector for electrically connecting the printed circuit board and the accessory to an electrical source of the vehicle. The base portion, the accessory holding element and the circuitry holding element are integrally molded together so that the accessory support comprises a unitarily molded accessory support. Document WO02/18174 A1, considered to represent the closest prior art, discloses an interior rearview mirror device for a motor vehicle having a mirror arrangement, a display being integrated in the mirror arrangement and having a sensor system for acquiring ambient information in the form of measured data, camera images of an optionally activatable camera being reproduced on the display, the sensor system optionally being coupled to the activated mirror arrangement or to the activated camera in such a way that the measured data are displayed as information additional to a mirror image or to the camera images. Since it is optional to use the mirror or the display, the camera has to be activated by the user as it is not always active.

### SUMMARY

A display system according to the invention is defined by the features of claim 1.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a schematic illustration of a vehicle utilizing a rear view display system of the present invention;
FIG. 2 is a schematic perspective illustration of a first view of the rear view display system of Figure 1;
FIG. 3 is a schematic perspective illustration of an exploded view of the housing for the rear view display system of Figures 1-2; and
FIG. 4 is a schematic perspective illustration of another view of the rear view display system of Figures 1-2.

### DETAILED DESCRIPTION

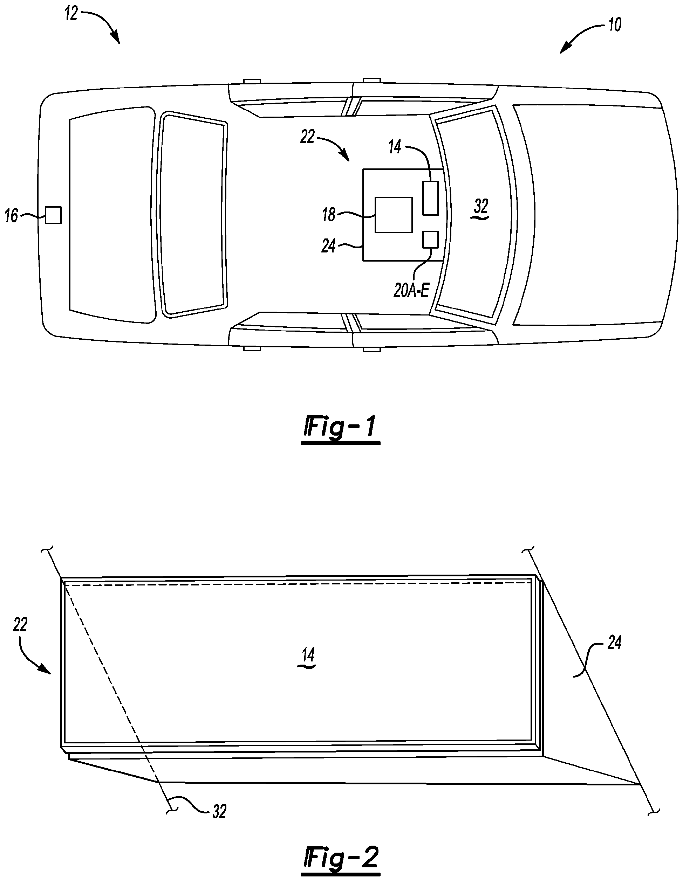

The following description is merely exemplary in nature and is in no way intended to limit the disclosure, its application, or uses. For purposes of clarity, the same reference numbers will be used in the drawings to identify similar elements. Figure 1 and illustrates a vehicle 10 and a rear view display system 12 of the present invention. Throughout the application the relative directions such as forward and rear are in reference to the direction which a driver for the vehicle 10 would primarily be facing when operating the vehicle 10. The rear view display system includes a display screen 14 mounted to the vehicle in an easily accessible location for a driver to observe. The display screen 14 is electronically connected to at least one camera 16 mounted to the rear of the vehicle 10. Multiple cameras 16 may be mounted to the vehicle 10 to provide viewing of different area surrounding the vehicle 10. For example, cameras 16 may be mounted to capture the "blind spot" area that is typically not shown by rear view mirrors and driver positioning. The camera 16 may also be a wide angle camera, such that a larger area may be viewed. The camera 16 and the display screen 14 are connected to an ECU 18 which controls the display screen 14. Because the rear view image provided to the driver is supplied by the camera 16 objects within the passenger compartment will not obstruct the view. The camera 16 may also be used by other vehicle 10 systems, such as vehicle 10 backing systems and may be packaged separately from an assembly 22.

The assembly 22 may include the display 14 and at least one additional device 20A-E packaged together for mounting. The display 14 and additional device 20A-E may or may not be components of the same vehicle system, but are arranged proximate to one another for assembly in the vehicle 10. The assembly 22 may provide convenient package of the components to minimize obstruction of the driver's view and/or provide for easy assembly of the components within the vehicle 10. A housing 24 at least partially contains and secures the assembly 22 including the display 14 and the at least one additional device 20A-E together.

The display screen 14 may be mounted in the traditional rear-view mirror position, proximate to the upper center of the windshield 32. Other mounting positions for the display screen 14 may also be considered. If a hard wire external connection to any of the components 14, 18, and/or 20 is required the connection may extend from the housing 24 toward a portion of the vehicle 10 that will minimize obstruction of the driver's view and sight of the wiring, e.g. from the housing 24 to the roof of the vehicle 10.

The additional device 20A-E may be utilized for other vehicle 10 and/or driver assistance systems and be packaged with the display 14 as an assembly 22. An ECU 18 may also included in the assembly 22. For example, the ECU 18, a forward looking sensor, such as lidar 20A or radar 20B, a temperature sensor 20C, a rain sensor 20D, and/or cameras 20E, lights sensors and even other control units used by other systems for the vehicle 10.

The display 14, and at least one additional device 20A-E are secured together to form the assembly 22. The assembly housing 24 at least partially contains and secures the display 14 and at least one additional device 20A-E together. The housing 24 may completely contain the individual components 18 and/or 20A-E for aesthetic purposes or may secure and partially contain the individual components 18 and/or 20A-E while allowing access to each of the components 18 and/or 20A-E.

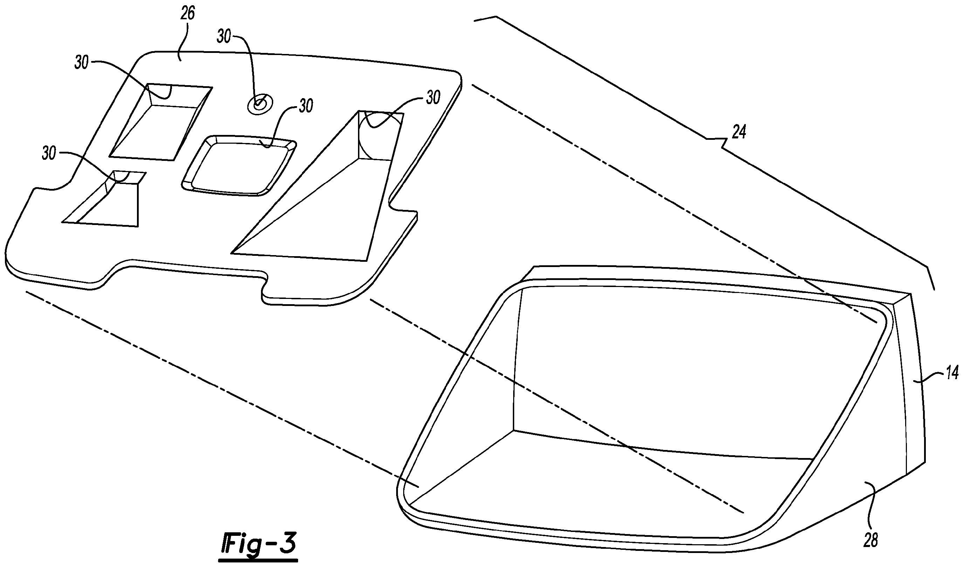

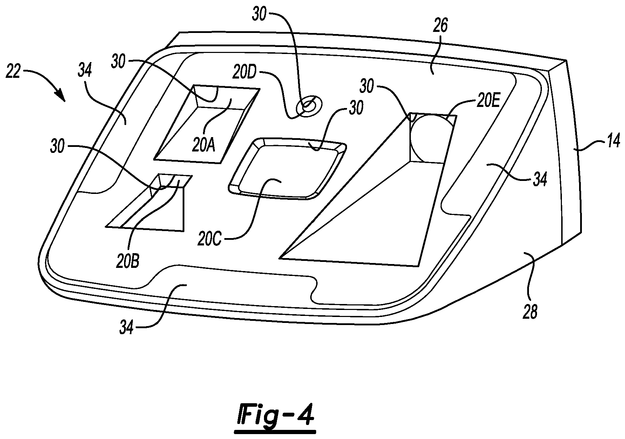

Referring to Figures 2-4 an example embodiment of a housing 24 is illustrated. The housing 24 at least partially defines a chamber 25 for at least partially containing the individual components 18 and/or 20A-E. A housing cover 26 may be placed over the chamber 25 and secured to a main housing portion 28. The cover 26 and main housing portion 28 provide an aesthetic exterior for the assembly 22. The cover 26 defines a plurality of orifices 30 allowing the individual components 18, and/or 20A-E contained within unobstructed access to the exterior of the housing 24. That is the orifices 26 are open to the exterior to allow the sensors and/or cameras 20A-E to collect data exterior to the housing 24 and the vehicle 10. Additionally, the cover may be shaped at several locations 34 to allow access to the interior of the housing 24 for easily mounting the housing 24 on a windshield 32. The display screen 14 is mounted to the exterior of the main housing portion 28. However, the rear of the display may be accessible from within the chamber 25 for electronically connecting the display screen 14 with the camera 16 and the ECU 18.

Rear view mirrors are easily adjustable because the reflection perceived by a driver in a rear view mirror depends highly on the position of the mirror relative to the driver's head. Because a camera(s) 16 is used there is an image on the display screen 14 rather than a reflection in a mirror. Thus, the need for the driver to adjust the display screen 14 to obtain the proper mirror position for seeing the rear view of the vehicle 10 may be reduced or eliminated. However, the position of the display screen 14 may still be adjustable to enhance the individual driver's view of the display screen 14. In one embodiment the ECU 18 may recognize the desired display system 12 settings and position for an individual driver and adjust the display screen 14 accordingly. Additionally, the display screen 14 is shown it be sized the same as the main housing portion 28. However, the display screen 14 may be larger or smaller that the housing 24 to provide the most desirable screen ratio for viewing the image from the rear-facing camera 16.

Although, the image shown may change, the display screen 14 shows the rear image when the vehicle 10 is running, regardless of the drive gear of the vehicle 10. That is, the display screen 14 displays an image that shows at least a partial rear view of the vehicle 10 whether the vehicle 10 is in a forward or reverse drive gear. The display screen 14 may also show at least a partial rear view image while the vehicle 10 is in park as well. The image displayed may be interrupted to change views, such as from one camera 16 to another or by panning a camera 16. However, while the image may be periodically interrupted, according to the invention, it is continuously showing an image that is showing at least a partial rear view of the vehicle 10 on the display screen 14 while the vehicle 10 is in a drive gear regardless of what drive gear is selected. Thus, the display system 14 according to the invention is used in place of a rear view mirror.

While the best modes for carrying out the invention have been described in detail the true scope of the disclosure should not be so limited, since those familiar with the art to which this invention relates will recognize various alternative designs and embodiments for practicing the invention within the scope of the appended claims.

## Claims

1. A display system (12) for a vehicle (10) comprising:
a housing (24), wherein the housing (24) is configured for being mounted to the vehicle (10) and wherein the housing (24) at least partially contains:
- a display screen (14) secured to the housing (24), wherein the display screen (14) is configured for showing an image provided by a camera at least partially facing in a rear direction of the vehicle (10), wherein the image on the display screen (14) is shown continuously while the vehicle (10) is in a drive gear,
- an ECU (18) mounted within the housing (24) for controlling the image shown on the display; and
a temperature sensor (20c), a rain sensor (20d), a forward facing camera, and a lidar (20a) and/or radar sensor (20b) at least one of them used by another system for the vehicle (10), and wherein one of them is at least partially contained within the housing (24), wherein the display system (12) is used in place of a rear view mirror of the vehicle (10).

2. The display system (12) of claim 1, wherein the display screen (14) is adjustably secured to the housing.

3. The display system (12) of claim 1, wherein the housing (24) further comprises a main housing portion (28) and a cover (26) for at least partially containing the temperature sensor (20c), the rain sensor (20d), the forward facing camera, and the lidar sensor (20a) and/or the radar sensor (20b), and wherein the cover (26) defines at least one orifice (30) for external access by the forward facing camera and at least one orifice (30) for external access by the temperature sensor (20c), the rain sensor (20d), the forward facing camera and the lidar sensor (20a) and/or the radar sensor (20b).

4. Vehicle (10) comprising a display system (12) according to one of the preceding claims.

5. Use of a display system (12) in place of a rear view mirror of a vehicle (10), wherein the display system (12) comprises:
a housing (24), wherein the housing (24) is configured for being mounted to the vehicle (10) and wherein the housing (24) at least partially contains:
- a display screen (14) secured to the housing (24), wherein the display screen (14) is configured for showing an image provided by a camera at least partially facing in a rear direction of the vehicle (10) wherein the image on the display screen (14) is shown continuously while the vehicle (10) is in a drive gear,
- an ECU (18) mounted within the housing (24) for controlling the image shown on the display; and
a temperature sensor (20c), a rain sensor (20d), a forward facing camera, and a lidar (20a) and/or radar sensor (20b) at least one of them used by another system for the vehicle (10), and wherein one of them is at least partially contained within the housing (24), wherein the display system (12) is used in place of a rear view mirror of the vehicle (10).

## Patentansprüche

1. Anzeigesystem (12) für ein Fahrzeug (10), umfassend:
ein Gehäuse (24), wobei das Gehäuse (24) dafür ausgestaltet ist, an dem Fahrzeug (10) angebracht zu werden, und wobei das Gehäuse (24) wenigstens teilweise Folgendes enthält:
- einen Bildschirm (14), der an dem Gehäuse (24) befestigt ist, wobei der Bildschirm (14) dafür ausgestaltet ist, ein Bild zu zeigen, das durch eine Kamera bereitgestellt wird, die wenigstens teilweise in eine Rückwärtsrichtung des Fahrzeugs (10) weist, wobei das Bild auf dem Bildschirm (14) ununterbrochen gezeigt wird, während das Fahrzeug (10) in einen Fahrgang geschaltet ist,
- eine ECU (18), die im Inneren des Gehäuses (24) angebracht ist, zum Steuern des auf der Anzeige gezeigten Bildes; und
einen Temperatursensor (20c), einen Regensensor (20d), eine nach vorn weisende Kamera und einen Lidar- (20a) und/oder Radarsensor (20b), wobei wenigstens einer von ihnen durch ein anderes System für das Fahrzeug (10) verwendet wird und wobei einer von ihnen wenigstens teilweise im Inneren des Gehäuses (24) aufgenommen ist, wobei das Anzeigesystem (12) anstelle eines Rückspiegels des Fahrzeugs (10) verwendet wird.

2. Anzeigesystem (12) nach Anspruch 1, wobei der Bildschirm (14) verstellbar an dem Gehäuse befestigt ist.

3. Anzeigesystem (12) nach Anspruch 1, wobei das Gehäuse (24) ferner einen Hauptgehäuseabschnitt (28) und eine Abdeckung (26) zum wenigstens teilweisen Aufnehmen des Temperatursensors (20c), des Regensensors (20d), der nach vorn weisenden Kamera und des Lidarsensors (20a) und/oder des Radarsensors (20b) umfasst und wobei die Abdeckung (26) wenigstens eine Öffnung (30) für einen externen Zugang durch die nach vorn weisende Kamera und wenigstens eine Öffnung (30) für einen externen Zugang durch den Temperatursensor (20c), den Regensensor (20d), die nach vorn weisende Kamera und den Lidarsensor (20a) und/oder den Radarsensor (20b) definiert.

4. Fahrzeug (10), das ein Anzeigesystem (12) nach einem der vorangehenden Ansprüche umfasst.

5. Verwendung eines Anzeigesystems (12) anstelle eines Rückspiegels eines Fahrzeugs (10), wobei das Anzeigesystem (12) umfasst:
ein Gehäuse (24), wobei das Gehäuse (24) dafür ausgestaltet ist, an dem Fahrzeug (10) angebracht zu werden, und wobei das Gehäuse (24) wenigstens teilweise Folgendes enthält:
- einen Bildschirm (14), der an dem Gehäuse (24) befestigt ist, wobei der Bildschirm (14) dafür ausgestaltet ist, ein Bild zu zeigen, das durch eine Kamera bereitgestellt wird, die wenigstens teilweise in eine Rückwärtsrichtung des Fahrzeugs (10) weist, wobei das Bild auf dem Bildschirm (14) ununterbrochen gezeigt wird, während das Fahrzeug (10) in einen Fahrgang geschaltet ist,
- eine ECU (18), die im Inneren des Gehäuses (24) angebracht ist, zum Steuern des auf der Anzeige gezeigten Bildes; und
einen Temperatursensor (20c), einen Regensensor (20d), eine nach vorn weisende Kamera und einen Lidar- (20a) und/oder Radarsensor (20b), wobei wenigstens einer von ihnen durch ein anderes System für das Fahrzeug (10) verwendet wird und wobei einer von ihnen wenigstens teilweise im Inneren des Gehäuses (24) aufgenommen ist, wobei das Anzeigesystem (12) anstelle eines Rückspiegels des Fahrzeugs (10) verwendet wird.

## Revendications

1. Système d'affichage (12) destiné à un véhicule (10) comprenant :
un boîtier (24), le boîtier (24) étant conçu pour être monté sur le véhicule (10) et le boîtier (24) renfermant au moins partiellement :
- un écran d'affichage (14) fixé au boîtier (24), l'écran d'affichage (14) étant conçu pour montrer une image fournie par une caméra orientée au moins partiellement dans une direction vers l'arrière du véhicule (10), l'image sur l'écran d'affichage (14) étant montrée en continu pendant que le véhicule (10) est en marche,
- une UCE (18) montée dans le boîtier (24) pour la commande de l'image montrée sur l'affichage ; et
un capteur de température (20c), un capteur de pluie (20d), une caméra orientée vers l'avant, et un capteur lidar (20a) et/ou radar (20b), au moins un de ces éléments étant utilisé par un autre système pour le véhicule (10), et au moins un de ces éléments étant renfermé au moins partiellement dans le boîtier (24), le système d'affichage (12) étant utilisé à la place d'un rétroviseur du véhicule (10).

2. Système d'affichage (12) selon la revendication 1, dans lequel l'écran d'affichage (14) est fixé au boîtier de manière réglable.

3. Système d'affichage (12) selon la revendication 1, dans lequel le boîtier (24) comprend en outre une partie de boîtier principale (28) et un couvercle (26) pour renfermer au moins partiellement le capteur de température (20c), le capteur de pluie (20d), la caméra orientée vers l'avant, et le capteur lidar (20a) et/ou le capteur radar (20b), et dans lequel le couvercle (26) définit au moins un orifice (30) destiné à l'accès à l'extérieur par la caméra orientée vers l'avant et au moins un orifice (30) destiné à l'accès à l'extérieur par le capteur de température (20c), le capteur de pluie (20d), la caméra orientée vers l'avant et le capteur lidar (20a) et/ou le capteur radar (20b).

4. Véhicule (10) comprenant un système d'affichage (12) selon l'une des revendications précédentes.

5. Utilisation d'un système d'affichage (12) à la place d'un rétroviseur d'un véhicule (10), le système d'affichage (12) comprenant :
un boîtier (24), le boîtier (24) étant conçu pour être monté sur le véhicule (10) et le boîtier (24) renfermant au moins partiellement :
- un écran d'affichage (14) fixé au boîtier (24), l'écran d'affichage (14) étant conçu pour montrer une image fournie par une caméra orientée au moins partiellement dans une direction vers l'arrière du véhicule (10), l'image sur l'écran d'affichage (14) étant montrée en continu pendant que le véhicule (10) est en marche,
- une UCE (18) montée dans le boîtier (24) pour la commande de l'image montrée sur l'affichage ; et
un capteur de température (20c), un capteur de pluie (20d), une caméra orientée vers l'avant, et un capteur lidar (20a) et/ou radar (20b), au moins un de ces éléments étant utilisé par un autre système pour le véhicule (10), et au moins un de ces éléments étant renfermé au moins partiellement dans le boîtier (24), le système d'affichage (12) étant utilisé à la place d'un rétroviseur du véhicule (10).
